# DEMANDE DE BREVET EUROPEEN

(11) **EP 4 549 927 A1**
(43) Date de publication de la demande: **07.05.2025**
(21) Numéro de dépôt: 24209342.5
(22) Date de dépôt: 29.10.2024
(51) Int. Cl.: G01N 29/02, G01N 29/036, G01N 21/17, G01N 29/24

(54) **SYSTÈME OPTO-MÉCANIQUE DE TRANSDUCTION À DÉTECTION AMÉLIORÉE**

(30) Priorité: 30.10.2023 FR 2311817
(71) Demandeur: Commissariat à l'Energie Atomique et aux Energies Alternatives, 75015 Paris (FR)
(72) Inventeur: TRZPIL, Wioletta, 38054 Grenoble cedex 09 (FR); SANSA PERNA, Marc, 38054 Grenoble cedex 09 (FR)
(74) Mandataire: Hautier IP

(57) **Abrégé**

L'invention concerne un système opto-mécanique de transduction d'un déplacement en modulation d'intensité optique comprenant un détecteur optique et un capteur mécanique comprenant une masse mobile dont une surface réceptrice est destinée à recevoir une sollicitation mécanique externe, et un dispositif d'excitation. Le dispositif d'excitation est configuré pour mettre en vibration la masse mobile le long d'une direction d'excitation à au moins une de ses fréquences de résonance. La vibration de la masse mobile est perturbée par la sollicitation mécanique externe, et modifie un champ évanescent du détecteur optique. La masse mobile présente une région d'interaction en regard du détecteur optique ainsi qu'une deuxième région, présentant respectivement, en projection selon un plan perpendiculaire à la direction d'excitation une superficie d'interaction S₁₁₁ et une deuxième superficie S₁₁₂, avec S₁₁₂<S₁₁₁.

## Description

### DOMAINE TECHNIQUE

La présente invention concerne la détection mécanique à l'aide de structures micromécaniques et/ou nanomécaniques résonantes. Elle trouve comme application particulièrement avantageuse la détection gravimétrique, notamment pour la spectrométrie de masse.

### ETAT DE LA TECHNIQUE

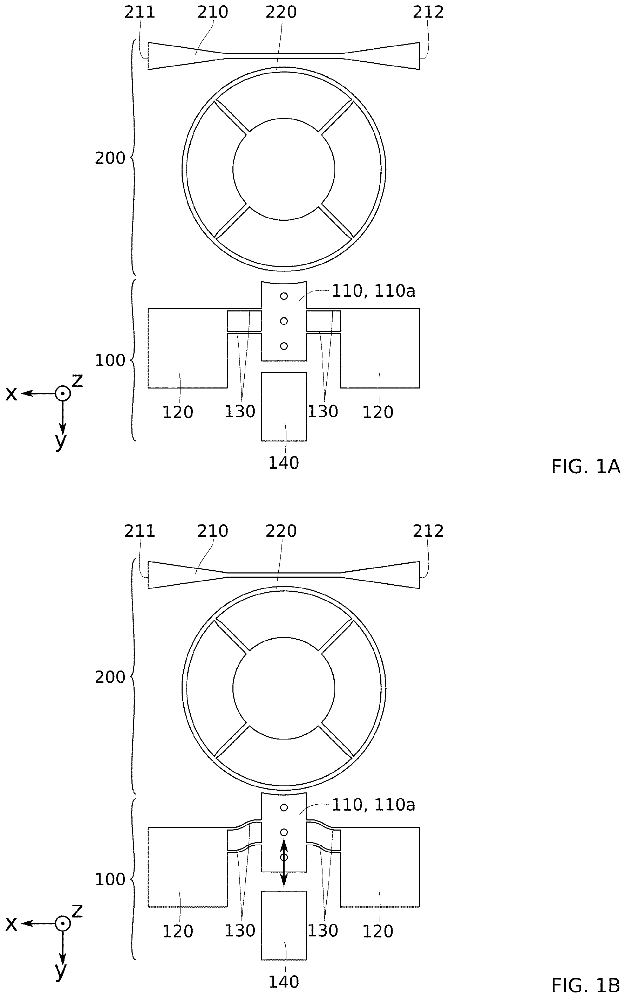

La spectrométrie de masse est une technique d'analyse permettant notamment la détermination de la masse moléculaire d'espèces au sein de composés. La spectrométrie de masse peut être mise en oeuvre par différentes techniques, parmi lesquelles des techniques utilisant des systèmes micro et/ou nanomécaniques résonants. Comme illustré aux figures 1A et 1B, de tels systèmes comprennent une masse mobile 110 excitée à sa fréquence de résonance. L'espèce à analyser est déposée sur la masse mobile 110, ce qui a pour effet de modifier la masse de la masse mobile 110. Cela a pour effet de modifier la fréquence de résonance de la masse mobile 110, cette modification pouvant être corrélée à la masse de l'espèce.

La détection de la fréquence de résonance de la masse mobile se fait typiquement à l'aide d'un détecteur optique 200 comprenant un résonateur optique 220. Le système de détection est alors configuré pour que le mouvement de vibration de la masse mobile 110 à proximité du résonateur optique 220 modifie les propriétés optiques de ce dernier.

L'analyse du composé est donc très dépendante du couplage opto-mécanique entre la masse mobile 110 et le résonateur optique 220, ainsi que de la zone d'interaction de la masse mobile 110 avec le résonateur optique 220. Notamment, plus cette zone d'interaction est faible, plus le signal traduisant les variations de la fréquence de résonance est faible.

Par ailleurs, la résolution en masse du système de détection dépend très fortement de la masse de la masse mobile 110 : une masse trop importante entrave en effet sa mobilité et dégrade la précision de l'analyse, c'est-à-dire augmente le plus petit poids d'analyte détectable.

Ces deux constats mènent à deux recommandations de dimensionnement opposées pour la masse mobile, car en effet pour une masse mobile classique de forme parallélépipédique, augmenter les dimensions de la zone d'interaction de la masse mobile 110 avec le résonateur optique 220 revient à augmenter le volume de la masse mobile 110 et donc, à matériau identique, sa masse.

Un objectif de la présente invention est donc de proposer une solution permettant d'améliorer la détection mécanique à l'aide de structures micromécaniques et/ou nanomécaniques résonantes.

### RESUME

Pour atteindre cet objectif, selon un mode de réalisation on prévoit un système opto-mécanique de transduction d'un déplacement en déphasage optique comprenant :
a. Un capteur mécanique comprenant une masse mobile dont une surface, dite surface réceptrice, est destinée à recevoir une ou des particules à détecter et à subir le poids de la ou les particules à détecter, et un dispositif d'excitation,
b. Un détecteur optique.

Le dispositif d'excitation est configuré pour mettre en vibration la masse mobile le long d'une première direction dite direction d'excitation à au moins une de ses fréquences de résonance, la vibration de la masse mobile étant modifiée par le poids de la ou les particules à détecter, la vibration de la masse mobile modifiant un champ évanescent du détecteur optique. La masse mobile présente une première région dite région d'interaction en regard du détecteur optique.

Le système se caractérise en ce que la masse mobile comprend au moins une deuxième région se situant en dehors de la région d'interaction, la région d'interaction et la deuxième région présentant respectivement, en projection selon un plan perpendiculaire à la direction d'excitation, dit plan vertical, une superficie d'interaction S₁₁₁ et une deuxième superficie S₁₁₂, la deuxième région étant telle que S₁₁₂<S₁₁₁.

La présence de la deuxième région et ce rapport de forme entre la deuxième région et la région d'interaction permettent de réduire la masse de la masse mobile et donc garantir une résolution en masse élevée, tout en optimisant la superficie d'interaction opto-mécanique entre le capteur mécanique et le détecteur optique.

De cette manière, on optimise à la fois la détection de particules par la masse mobile et la transmission de l'information de détection de la masse mobile au détecteur optique. La détection mécanique des particules est ainsi améliorée.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures 1A et 1B sont des représentations schématiques d'un système de détection selon l'art antérieur, comprenant un capteur mécanique et un détecteur optique. Les figures 1A et 1B représentent entre autres un exemple de détecteur optique pouvant être intégré dans un système de détection selon l'invention. La figure 1A illustre un cas dans lequel la masse mobile est immobile.
La figure 1B illustre un cas dans lequel la masse mobile est en vibration.
La figure 2 est une vue en coupe du système selon l'invention.
Les figures 3A et 3B sont des vues de dessus du système selon l'invention, plus particulièrement selon un mode de réalisation dans lequel la région d'interaction présente une largeur supérieure à la deuxième région.
La figure 3B illustre un mode de réalisation dans lequel la masse mobile présente une région d'excitation présentant une hauteur supérieure à celle de la deuxième région.
La figure 4 illustre un mode de réalisation de l'invention dans lequel la masse mobile est reliée à des régions d'ancrage par des articulations permettant de limiter la non-linéarité de sa vibration.
La figure 5 représente un système de détection selon l'invention comprenant une pluralité de masses mobiles.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Avantageusement, S₁₁₁>2*S₁₁₂, de préférence S₁₁₁>3*S₁₁₂, de préférence S₁₁₁>5*S₁₁₂.

De préférence, selon une troisième direction perpendiculaire à un plan, dit plan d'excitation, dans lequel s'étend principalement la surface réceptrice, la région d'interaction présente une hauteur H₁₁₁ et la deuxième région présente une hauteur H₁₁₂, avec H₁₁₁>H₁₁₂, de préférence H₁₁₁>2*H₁₁₂, de préférence H₁₁₁>5*H₁₁₂. De façon générale, avantageusement, la hauteur H₁₁₁ de la région d'interaction est sensiblement la même que la hauteur H₂₂₀ du détecteur optique, également mesurée selon la troisième direction perpendiculaire au plan d'excitation. H₂₂₀ est typiquement sensiblement égale à 220 nm. Ainsi, de préférence, H₁₁₁ est sensiblement égale à 220 nm.

De préférence, selon une troisième direction perpendiculaire à un plan, dit plan d'excitation, dans lequel s'étend principalement la surface réceptrice, la deuxième région présente une hauteur H₁₁₂, avec H₁₁₂ ≤ 200 nm, de préférence H₁₁₂ ≤60 nm, de préférence H₁₁₂ ≤30 nm.

Avantageusement, selon une deuxième direction parallèle au plan vertical et perpendiculaire à la direction d'excitation, la région d'interaction présente une largeur l₁₁₁ et la deuxième région présente une largeur l₁₁₂, avec l₁₁₁>1,5*l₁₁₂, de préférence l₁₁₁>2*l₁₁₂.

Avantageusement, selon la direction d'excitation, la masse mobile présente une longueur L₁₁₀ et la région d'interaction présente une longueur L₁₁₁, avec L₁₁₁≤0,1*L₁₁₀, de préférence L₁₁₁≤0,03*L₁₁₀. Cela permet que la région d'interaction ne s'étende pas trop au sein de la masse mobile. Ainsi, la masse de la masse mobile est suffisamment peu impactée par la présence de la région d'interaction. La masse de la masse mobile reste suffisamment faible pour que la détection soit optimale. Par exemple, L₁₁₀=1,5µm et L₁₁₁=0,15 µm ou L₁₁₀=1,5µm et L₁₁₁=0,1 µm.

Selon un mode de réalisation préféré, la région d'interaction présente une face d'interaction en regard d'une face d'interaction secondaire du détecteur optique, la face d'interaction et la face d'interaction secondaire présentant des formes identiques en projection dans un plan perpendiculaire au plan vertical et parallèle à la direction d'excitation, dit plan horizontal. Cela permet d'améliorer l'interaction opto-mécanique entre la région d'interaction et le rayonnement laser secondaire.

Selon un exemple, la face d'interaction et la face d'interaction secondaire présentent une forme d'arc de cercle en projection dans le plan horizontal.

Selon un mode de réalisation préféré, la masse mobile présente une région d'excitation en regard du dispositif d'excitation, la région d'excitation présentant en projection selon le plan perpendiculaire à la direction d'excitation, une superficie d'excitation S₁₁₃ avec S₁₁₃>S₁₁₂. Cela permet d'augmenter l'interaction entre la masse mobile et le dispositif d'excitation et donc d'optimiser l'excitation électrostatique dans le cas d'une excitation par une électrode.

De préférence, la région d'interaction et la région d'excitation présentent des volumes sensiblement identiques, et de préférence des formes sensiblement identiques. De préférence, selon une troisième direction perpendiculaire à un plan, dit plan d'excitation, dans lequel s'étend principalement la surface réceptrice, la région d'excitation présente une hauteur H₁₁₃ sensiblement égale à la hauteur H₁₄₀ du dispositif d'excitation, également mesurée selon la troisième direction perpendiculaire au plan d'excitation. H₁₄₀ est typiquement sensiblement égale à 220 nm. Ainsi, de préférence, H₁₁₃ est sensiblement égale à 220 nm. Par ailleurs, selon un mode de réalisation préféré, H₁₁₁=H₁₁₃.

De préférence, la région d'interaction et la région d'excitation se situent de part et d'autre de la deuxième région. Cela permet d'équilibrer la masse mobile. En combinaison avec la caractéristique selon laquelle les volumes de la région d'interaction et de la région d'excitation sont identiques, l'équilibrage est optimal. Plus précisément, cela permet que le centre de gravité de la masse mobile se trouve au milieu de sa longueur L₁₁₀ selon la direction d'excitation.

Selon un exemple préféré, la masse mobile est reliée à des régions d'ancrage par l'intermédiaire d'articulations configurées pour réduire une non-linéarité de la vibration de la masse mobile. Cela permet, par rapport à des ancrages encastrés-guidés couramment utilisés dans les dispositifs NOEMS (acronyme anglais de Nano-opto-electro-mechanical systems, signifiant nano systèmes opto-électro-mécaniques), de limiter voire de supprimer les effets non-linéaires sur le déplacement de la masse mobile. On maximise ainsi le déplacement de la masse mobile et on améliore le signal de détection du dispositif.

Selon un mode de réalisation, le dispositif d'excitation est une électrode appliquant sur la masse mobile une force électrostatique à la ou les fréquences de résonance de la masse mobile.

Les termes « sensiblement », « environ », « de l'ordre de » signifient, lorsqu'ils se rapportent à une valeur, « à 10% près » de cette valeur ou, lorsqu'ils se rapportent à une orientation angulaire, « à 10° près » de cette orientation. Ainsi, une direction sensiblement normale à un plan signifie une direction présentant un angle de 90±10° par rapport au plan.

On utilisera dans la description détaillée qui suit un repère XYZ représenté sur les figures.

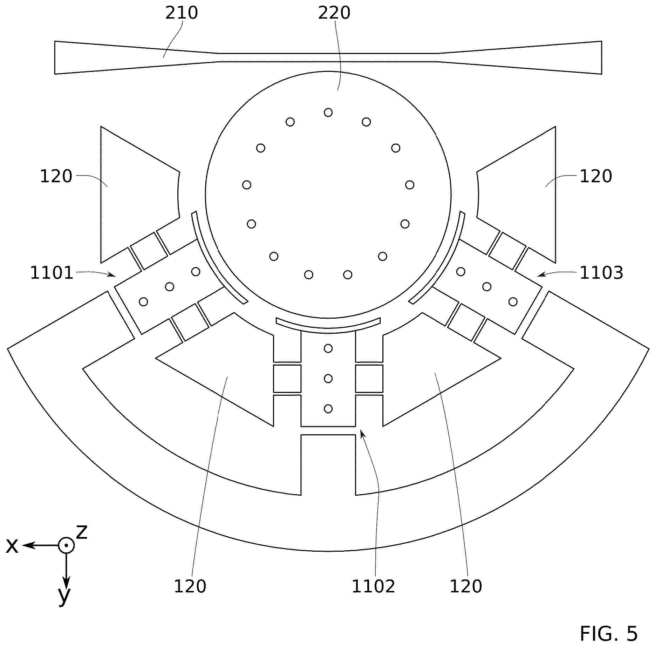

Le système 1 selon différents modes de réalisation de l'invention va maintenant être décrit en référence aux figures 1 à 5.

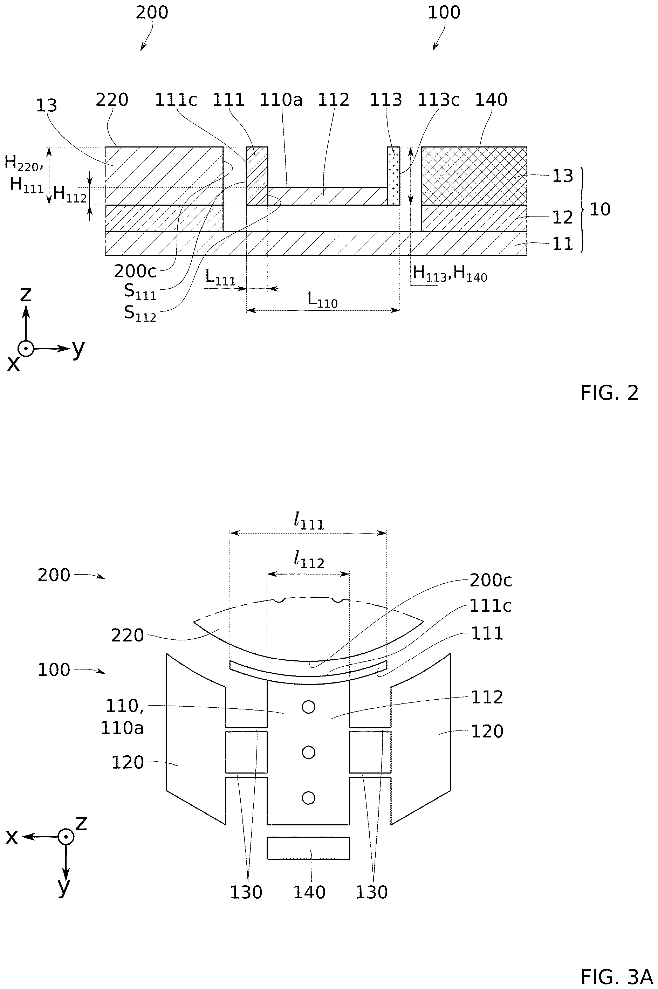

Comme illustré en figure 2, les éléments composant le système 1 peuvent être formés dans un même substrat 10 ou bien, pour certains, avoir été déposés sur ce substrat 10. Certains éléments peuvent être formés lors de mêmes étapes de fabrication et être constitués du même matériau, par exemple le silicium ou le poly-silicium. Le substrat 10 peut par exemple comprendre un substrat support 11, typiquement à base de silicium. Une couche d'oxyde enterré 12 et une couche active 13 peuvent recouvrir le substrat support 11, la couche d'oxyde enterré 12 se trouvant entre le substrat support 11 et la couche active 13. Les différents éléments du système 1 décrits plus avant sont avantageusement formés dans la couche active 13 par des procédés classiques de micro-électronique.

Le capteur mécanique 100 comprend une masse mobile 110. La masse mobile 110 est typiquement reliée à des régions d'ancrage 120 étant d'un seul tenant avec le substrat support 11. La masse mobile est reliée aux régions d'ancrage 120 par l'intermédiaire de branches 130 dites branches de fixation. Ces branches de fixation 130 sont déformables, la masse mobile 110 est ainsi apte à se déplacer relativement au substrat support 11.

La masse mobile 110 présente au moins une surface réceptrice 110a destinée à recevoir une ou plusieurs particules à détecter. Ces particules peuvent par exemple être des particules biologiques telles que des molécules, des particules de type viral (souvent désignée par l'acronyme anglais virus-like particles (VLPs)) ou des protéines, ou bien des particules contenues dans l'air ou dans un gaz. Lorsqu'une particule se dépose sur la masse mobile 110, l'ajout de sa masse provoque un changement de la fréquence de résonance de la masse mobile 110. Ce changement de fréquence est directement lié à la masse de la particule. Le mode de détection de la fréquence sera détaillé plus avant.

Dans les exemples illustrés aux figures 1A, 1B, 3A, 3B, 4 et 5, la masse mobile 110 présente des ouvertures traversantes selon la troisième direction Z. Ces ouvertures sont caractéristiques de l'utilisation de certains procédés de fabrication, mais il est entendu qu'elles peuvent être absentes.

Le capteur mécanique 100 comprend en outre un dispositif d'excitation 140 apte à mettre la masse mobile 110 en vibration et pouvant être de différents types.

Selon un mode de réalisation privilégié, le dispositif d'excitation 140 est de type électrostatique. Par exemple, il comporte une électrode se trouvant en regard d'une région d'excitation 113 de la masse mobile 110. En appliquant une différence de potentiel entre la région d'excitation 113 et l'électrode, cette différence de potentiel présentant une composante constante et une composante variant à une fréquence de résonance de la masse mobile 110, une force électrostatique apparaît entre l'électrode et la masse mobile 110. Cette dernière est ainsi mise en vibration à la fréquence de résonance. Comme illustré aux figures 1A et 1B, le dispositif d'excitation 140 peut comprendre une unique électrode. Il est cependant envisageable qu'il en comprenne plusieurs, par exemple deux électrodes se trouvant de part et d'autre de la masse mobile. Dans ce cas, on applique aux deux électrodes des différences de potentiel déphasées d'une demi-période. La masse mobile 110 peut également être connectée électriquement par l'intermédiaire des régions d'ancrage 120 afin d'assurer sa mise en vibration.

Selon une variante, le dispositif d'excitation est de type optique. Il peut par exemple comprendre un résonateur optique mis en résonance et générant ainsi une force de gradient permettant d'attirer et repousser la masse mobile. En modulant la fréquence de résonance du résonateur optique, et donc la force de gradient, on peut mettre en vibration la masse mobile 110 à sa ou l'une de ses fréquence(s) de résonance.

Selon une autre variante, l'excitation est de type piézoélectrique. La couche active 13 peut par exemple être à base d'un matériau piézoélectrique tel que l'AlN, le LNO (LaNiO₃) ou le LTO (La₂Ti₂O₇). Un champ électrique permet alors de mettre en vibration la masse mobile 110.

La figure 1B illustre le système lorsque la masse mobile 110 se trouve en vibration sous l'action du dispositif d'excitation 140. La flèche représente le déplacement en va-et-vient de la masse mobile 110.

Le système 1 comprend en outre un détecteur optique 200 permettant de détecter les vibrations, et plus particulièrement les variations de vibration, de la masse mobile. Un exemple de mode de réalisation du détecteur optique 200 va maintenant être décrit en référence aux figures 1A et 1B. Le détecteur optique 200 n'est pas représenté dans son intégralité dans les figures 2 à 4, mais il est entendu que son aspect tel que représenté aux figures 1A et 1B et ses caractéristiques décrites en référence à cette même figure s'appliquent entièrement à l'invention.

Le détecteur optique 200 comprend typiquement un guide d'onde 210, classiquement linéaire, et un résonateur optique 220, par exemple en forme d'anneau - on parle alors d'anneau optique -, de disque ou plus généralement de « race track » (pouvant être traduit en français par le terme « circuit »). Le guide d'onde 210 et le résonateur optique 220 sont couplés par un couplage évanescent.

Le guide d'onde 210 comprend une entrée 211 et une sortie 212 entre lesquelles, lorsque le système est en fonctionnement, est diffusé un rayonnement lumineux, typiquement un rayonnement laser, dit rayonnement de détection. Le couplage entre le guide d'onde 210 et le résonateur optique 220 est tel qu'au moins une partie du rayonnement de détection est injectée dans le résonateur optique 220 puis collectée à nouveau par le guide d'onde 210. La vibration de la masse mobile 110 à proximité du résonateur optique 220 provoque une modification de l'indice optique effectif de ce dernier et donc perturbe le rayonnement de détection passant dans le résonateur optique 220.

Afin de permettre la détection de la vibration de la masse mobile 110 par le détecteur optique 200, le résonateur optique 220 et la masse mobile 110 sont positionnés de sorte à ce qu'au moins une partie de la masse mobile 110 se trouve dans le champ évanescent du résonateur optique 220. La distance entre la masse mobile 110 et le résonateur optique 220 peut par exemple être de l'ordre de 100 nm. Par ailleurs, la disposition relative du résonateur optique 220 et de la masse mobile 110 est telle que lorsque la masse mobile 110 est en vibration, la distance entre ces deux éléments varie et la masse mobile 110 reste dans le champ évanescent du résonateur optique 220.

Le détecteur optique 200 comprend par ailleurs des moyens permettant de détecter la puissance du rayonnement lumineux au niveau de la sortie 212 du guide d'onde 210. Cette puissance est proportionnelle au déplacement de la masse mobile 110. L'analyse de l'évolution de cette puissance permet ainsi de déterminer la fréquence de résonance de la masse mobile 110 et ses évolutions, et donc de déterminer la masse de la ou des particule(s) déposée(s) sur cette dernière.

Les moyens de détection de la puissance du rayonnement lumineux peuvent par exemple comprendre un spectromètre, un photodétecteur telle qu'une photodiode, ou bien un laser externe et des moyens de détection interférométriques.

La masse mobile 110 selon l'invention présente une première région 111, dite région d'interaction 111, et une deuxième région 112. La région d'interaction 111 se trouve en regard du détecteur optique 200, et plus particulièrement en regard du résonateur optique 220. Plus précisément, une face d'interaction 111c de la région d'interaction 111 se trouve en regard d'une face d'interaction secondaire 200c du détecteur optique 200, et généralement du résonateur optique 220. La face d'interaction 111c forme ainsi une surface distale de la région d'interaction 111, qui est au plus proche du détecteur optique 200 ; elle forme une partie à l'interface de ce résonateur. La face d'interaction 111c correspond typiquement un flanc 111c de la région d'interaction 111. La deuxième région 112 et le résonateur optique 220 se trouvent de part et d'autre de la région d'interaction 111.

Afin de garantir que la masse de la masse mobile 110 soit suffisamment faible pour que l'analyse soit précise, tout en conservant une perturbation suffisamment forte des propriétés optiques du résonateur optique 220 par la vibration de la masse mobile 110 pour garantir une bonne détection de ladite vibration, on prévoit qu'en projection dans le plan vertical XZ, la deuxième région 112 présente une superficie S₁₁₂ inférieure à celle de la région d'interaction 111, notée S₁₁₁. La projection dans le plan vertical XZ de la région d'interaction 111 correspond typiquement à celle de son flanc 111c en regard du résonateur optique 220.

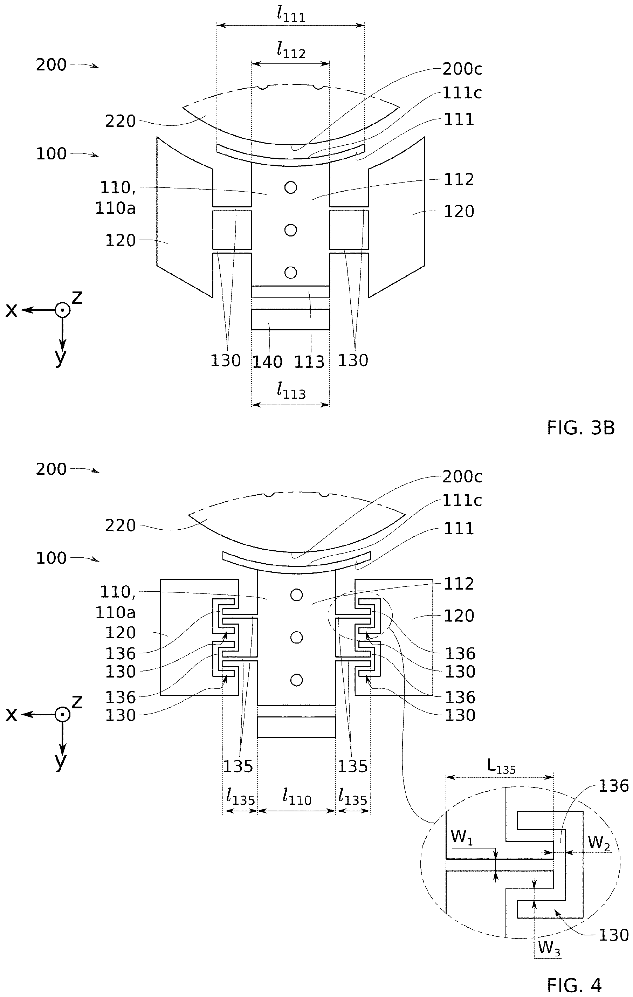

On prévoit que la région d'interaction 111 puisse présenter une largeur l₁₁₁ selon la deuxième direction X (voir figures 3A et 3B), une hauteur H₁₁₁ selon la troisième direction Z (voir figure 2) ou bien à la fois une largeur l₁₁₁ selon la deuxième direction X et une hauteur H₁₁₁ selon la troisième direction Z supérieure(s) à celle(s) de la deuxième région 112 (c'est-à-dire l₁₁₁≥l₁₁₂ et/ou H₁₁₁≥H₁₁₂, le cas l₁₁₁=l₁₁₂ et H₁₁₁=H₁₁₂ étant cependant exclu). On pourra ainsi notamment avoir l₁₁₁>l₁₁₂ et/ou H₁₁₁>H₁₁₂.

Avantageusement, comme illustré aux figures 3A et 3B, le flanc 111c de la région d'interaction 111 se trouvant en regard du détecteur optique 200, et plus précisément du résonateur optique 220, présente une forme complémentaire à ce dernier. Cela permet de maximiser l'interaction mécano-optique entre la masse mobile 110 et le détecteur optique 200. Par exemple, lorsque le résonateur optique 220 est un anneau optique et présente donc une forme de couronne en projection dans le plan d'excitation XY, ou bien lorsque le résonateur optique 220 présente une forme de disque en projection dans le plan d'excitation XY, on prévoit avantageusement que la région d'interaction 111 présente une forme concave vers le résonateur optique 220, c'est-à-dire au niveau de son flanc 111c.

La masse mobile 110 comprend avantageusement une troisième région dite région d'excitation 113 se trouvant en regard du dispositif d'excitation 140. Plus précisément, un flanc 113c de la région d'excitation 113 se trouve en regard du résonateur optique 220. La région d'excitation 113 et la région d'interaction 111 se trouvent avantageusement de part et d'autre de la deuxième région 112.

Afin d'équilibrer la masse mobile 110, la région d'excitation 113 présente de préférence sensiblement le même volume que la région d'interaction 111. Ainsi, de préférence, la région d'excitation 113 présente une largeur l₁₁₃ selon la deuxième direction X (voir figure 3B), une hauteur H₁₁₃ selon la troisième direction Z (voir figure 2) ou bien à la fois une largeur l₁₁₃ selon la deuxième direction X et une hauteur H₁₁₃ selon la troisième direction Z supérieure(s) à celle(s) de la deuxième région 112.

La région d'excitation 113 présente même avantageusement une forme sensiblement identique à celle de la région d'interaction 111. La masse mobile 110 est alors symétrique par rapport à un plan parallèle au plan vertical XZ.

Avantageusement, le flanc 113c de la région d'excitation 113 se trouvant en regard du dispositif d'excitation 114 présente une forme complémentaire à ce dernier. Cela permet de maximiser l'interaction entre ces deux éléments permettant de mettre en vibration la masse mobile 110, par exemple une interaction électrostatique.

La surface réceptrice 110a de la masse mobile 110 comprend la face supérieure de chacune des régions constituant la masse mobile 110, notamment la face supérieure de la région d'interaction 111, la face supérieure de la deuxième région 112, et éventuellement la face supérieure de la région d'excitation 113.

### Exemple préféré de réalisation des branches de fixation 130

Selon un mode de réalisation préféré, les branches de fixation 130 présentent des articulations configurées pour réduire la non-linéarité du déplacement de la masse mobile 110.

En effet, dans le cas de branches de fixation 130 constituées de simples bras s'étendant principalement selon la deuxième direction X, comme illustré aux figures 1A, 1B, 3A et 3B, lorsque la masse mobile 110 est mise en vibration selon la direction d'excitation Y, les bras subissent une élongation qui modifie sa raideur, ce qui a pour effet de créer des non-linéarités et de limiter l'amplitude de mouvement de la masse mobile 110. Le signal maximal de détection s'en retrouve ainsi limité lui aussi.

Ainsi, comme illustré à la figure 4, chacune des branches de fixation 130 comprend avantageusement un bras 135 et une portion coudée 136. La portion coudée forme un « U ». Plus précisément, la portion coudée 136 présente deux zones coudées entre lesquelles est raccordé le bras à la portion coudée 136. La portion coudée 136 est raccordée à une zone d'ancrage 120. Avantageusement, la masse mobile 110, les bras 135, les portions coudées 136 et les zones d'ancrage 120 sont d'un seul tenant. Ils peuvent notamment être formés durant la même étape de fabrication et être formés du ou des mêmes matériaux.

Chaque bras 135 présente une longueur L₁₃₅ selon la deuxième direction X et une largeur W₁ selon la direction d'excitation Y. Chaque portion coudée 136 présente deux dimensions caractéristiques : une largeur W₂, mesurée selon la deuxième direction X au niveau de la partie, dite partie principale, de la portion coudée 136 à laquelle est raccordé le bras 135, et une largeur W₃ mesurée selon la direction d'excitation Y au niveau des parties de la portion coudée 136 formant les coudes avec la partie principale.

Le dimensionnement des branches de fixation 120 est entre autres réalisé en fonction de la largeur l₁₁₀ de la masse mobile, mesurée selon la deuxième direction X. l₁₁₀ est typiquement comprise entre 0,5 et 50 µm. Avantageusement, L₁₃₅ est du même ordre de grandeur que l₁₁₀, et donc par exemple compris entre 0,5 et 50 µm. Selon un exemple, L₁₃₅ est sensiblement égale à l₁₁₀. Par ailleurs, typiquement, les largeurs W₁, W₂ et W₃ sont sensiblement égales. Elles peuvent chacune être comprise entre 10 et 200 nm.

De telles branches de fixation 130 permettent de transformer le mouvement de translation de la masse mobile 110 en un mouvement en rotation au niveau des zones d'ancrage 120. En conséquence, il n'y a pas d'élongation du bras 135 lors de la vibration de la masse mobile 110 et il est possible d'atteindre des amplitudes de vibration plus importantes en régime linéaire.

### Système de détection à plusieurs masses mobiles

Selon un mode de réalisation avantageux, le système selon l'invention peut comprendre une pluralité de masses mobiles 1101, 1102, 1103, chaque masse mobile 1101, 1102, 1103 étant placées de façon à modifier le champ évanescent du détecteur optique 200.

Ces masses mobiles sont de préférence disposées régulièrement autour du résonateur optique 220. De préférence, on trouve une alternance de masses mobiles 1101, 1102, 1103 et de régions d'ancrage 120 autour du résonateur optique 220. Une même région d'ancrage 120 peut servir à ancrer deux (ou plus) masses mobiles 1101, 1102, 1103.

En mettant en vibration les masses mobiles 1101, 1102, 1103 à des fréquences de résonances différentes, il est possible après traitement de séparer les influences des différentes masses mobiles 1101, 1102, 1103 sur les propriétés optiques du détecteur optique 200 et ainsi de remonter à la masse des particules déposées sur chaque masse mobile 1101, 1102, 1103. Un tel système permet de détecter simultanément plusieurs particules. Ce système peut ainsi offrir une détection plus rapide.

### Spectromètre de masse comprenant un système selon l'invention

Un autre objet de l'invention concerne un spectromètre de masse comprenant un système de détection tel que décrit précédemment.

Le système peut en effet être disposé au sein d'une cavité pouvant accueillir une ou des espèces à analyser. Avantageusement, on prévoit que les particules soient conduites vers la surface réceptrice 110a de la masse mobile 110 par un conduit. Dans le cas d'un système comprenant plusieurs masses mobiles 1101, 1102, 1103, on peut par exemple prévoir que le conduit présente une ouverture en regard de la surface réceptrice 110a de chaque masse mobile 1101, 1102, 1103.

L'invention n'est pas limitée aux modes de réalisations précédemment décrits et s'étend à tous les modes de réalisation couverts par l'invention.

## Revendications

1. Système opto-mécanique (1) de transduction d'un déplacement en déphasage optique comprenant :
• un capteur mécanique (100) comprenant une masse mobile (110) dont une surface, dite surface réceptrice (110a), est destinée à recevoir une ou des particules à détecter et à subir le poids de la ou les particules à détecter, et un dispositif d'excitation (140),
• un détecteur optique (200) comprenant un résonateur optique (220),
le dispositif d'excitation (140) étant configuré pour mettre en vibration la masse mobile (110) le long d'une première direction dite direction d'excitation (Y) à au moins une de ses fréquences de résonance, la vibration de la masse mobile (110) étant modifiée par le poids de la ou les particules à détecter, la vibration de la masse mobile (110) modifiant un champ évanescent du détecteur optique (200),
la masse mobile (110) présentant une première région dite région d'interaction (111) en regard du résonateur optique (220) du détecteur optique (200),
**caractérisé en ce que** la masse mobile (110) comprend au moins une deuxième région (112) se situant en dehors de la région d'interaction (111), la deuxième région (112) et le résonateur optique (220) se trouvent de part et d'autre de la région d'interaction (111), la région d'interaction (111) et la deuxième région (112) présentant respectivement, en projection selon un plan perpendiculaire à la direction d'excitation (Y), dit plan vertical (XZ), une superficie d'interaction S₁₁₁ et une deuxième superficie S₁₁₂, la deuxième région (112) étant telle que S₁₁₁>S₁₁₂, et **en ce que** selon une troisième direction (Z) perpendiculaire à un plan, dit plan d'excitation (XY), parallèlement auquel s'étend principalement la surface réceptrice (110a), la région d'interaction (111) présente une hauteur H₁₁₁ et la deuxième région (112) présente une hauteur H₁₁₂, avec H₁₁₁>H₁₁₂.

2. Système (1) selon la revendication précédente dans lequel S₁₁₁>2*S₁₁₂, de préférence S₁₁₁>3*S₁₁₂, de préférence S₁₁₁>5*S₁₁₂.

3. Système (1) selon l'une quelconque des revendications précédentes dans lequel H₁₁₁>2*H₁₁₂, de préférence H₁₁₁>5*H₁₁₂.

4. Système (1) selon l'une quelconque des revendications précédentes dans lequel, selon une troisième direction (Z) perpendiculaire à un plan, dit plan d'excitation (XY), parallèlement auquel s'étend principalement la surface réceptrice (110a), la deuxième région (112) présente une hauteur H₁₁₂, avec H₁₁₂ ≤ 60 nm, de préférence H₁₁₂ ≤ 30 nm.

5. Système (1) selon l'une quelconque des revendications précédentes dans lequel, selon une deuxième direction (X) parallèle au plan vertical (XZ) et perpendiculaire à la direction d'excitation (Y), la région d'interaction (111) présente une largeur l₁₁₁ et la deuxième région (112) présente une largeur l₁₁₂, avec l₁₁₁>1,5*l₁₁₂, de préférence l₁₁₁>2*l₁₁₂.

6. Système (1) selon l'une quelconque des revendications précédentes dans lequel, selon la direction d'excitation (Y), la masse mobile (110) présente une longueur L₁₁₀ et la région d'interaction (111) présente une longueur L₁₁₁, avec L₁₁₀≤0,1*L₁₁₀, de préférence L₁₁₁≤0,03*L₁₁₀.

7. Système (1) selon l'une quelconque des revendications précédentes dans lequel la région d'interaction (111) présente une face d'interaction (111c) en regard d'une face d'interaction secondaire (200c) du détecteur optique (200), la face d'interaction (111c) et la face d'interaction secondaire (200c) présentant des formes identiques en projection dans un plan perpendiculaire au plan vertical (XZ) et parallèle à la direction d'excitation (Y), dit plan horizontal (XY).

8. Système (1) selon la revendication précédente dans lequel la face d'interaction (111c) et la face d'interaction secondaire (200c) présentent une forme d'arc de cercle en projection dans le plan horizontal (XY).

9. Système (1) selon l'une quelconque des revendications précédentes dans lequel la masse mobile (110) présente une région d'excitation (113) en regard du dispositif d'excitation (140), la région d'excitation (113) présentant en projection selon le plan perpendiculaire (XZ) à la direction d'excitation (Y), une superficie d'excitation S₁₁₃ avec S₁₁₃>S₁₁₂.

10. Système (1) selon la revendication précédente dans lequel la région d'interaction (112) et la région d'excitation (113) présentent des volumes sensiblement identiques, et de préférence des formes sensiblement identiques.

11. Système (1) selon l'une quelconque des deux revendications précédentes dans lequel la région d'interaction (111) et la région d'excitation (113) se situent de part et d'autre de la deuxième région (112).

12. Système (1) selon l'une quelconque des revendications précédentes dans lequel le dispositif d'excitation (140) est une électrode appliquant sur la masse mobile (110) une force électrostatique à la ou les fréquences de résonance de la masse mobile (110).

13. Spectromètre de masse comprenant une cavité configurée pour accueillir au moins une particule, la cavité comprenant un système opto-mécanique (1) selon l'une quelconque des revendications précédentes et une source de lumière configurée pour injecter un rayonnement dans le détecteur optique (200) du système opto-mécanique (1).

14. Spectromètre de masse selon la revendication précédente dans lequel la cavité comprend en outre un conduit configuré pour amener l'au moins une particule vers la surface réceptrice (110a) de la masse mobile (110).
